# EUROPEAN PATENT APPLICATION

(11) **EP 1 504 891 A1**
(43) Date of publication of application: **09.02.2005**
(21) Application number: 03017926.1
(22) Date of filing: 06.08.2003
(51) Int. Cl.: B32B 15/08, B32B 1/08, F16L 58/10

(54) **Multilayer coated corrosion resistant article and method of production thereof**

(71) Applicant: Elisha Holding LLC, Moberly, Missouri 65270 (US)
(72) Inventor: Grolmes, Holger Manfred, 59597 Erwitte (DE); Klos, Klaus-Peter, Dr., 65468 Trebur (DE)
(74) Representative: COHAUSZ & FLORACK

(57) **Abstract**

The disclosure relates to a corrosion resistant article comprising a metal body 1 and a protective coating applied on at least one surface of said metal body 1, said protective coating comprising: (a) a zinc layer 3 comprising metallic zinc; (b) a silicate layer 4 comprising at least one silicate; and (c) a synthetic resin layer 6 comprising at least one fluoroplastic material such as, for example, polyvinylfluoride. In particular, the disclosure relates to a corrosion resistant brake pipe or fuel pipe having a protective coating for use in motor vehicles. The protective coating is substantially free of chromates and phosphates and, hence, environmentally acceptable.

## Description

### FIELD OF THE INVENTION

The instant invention relates to multilayer coated corrosion resistant articles and a method of production thereof. In particular, the instant invention relates to multilayer coated corrosion resistant metal fluid carrying systems which can be used, for example, as heating ventilation and cooling (HVAC), brake pipes or fuel pipes in automobiles or as feed channels for feeding oil or air to various kinds of machines and equipments.

### BACKGROUND OF THE INVENTION

Safety sensitive automobile components such as brake pipes and fuel pipes for motor vehicles must meet strict requirements with regard to corrosion and wear resistance. Such pipes are located under the body of the vehicle and are exposed to severe outdoor environments including road water and rock salt. The pipes are also prone to damage or wear by stones or mud spattered by the rotating tires of the vehicle. As they are used in such harsh outdoor environments, such pipes are required to have high degrees of corrosion resistance, scratch resistance, impact strength and mechanical wear resistance. Conventional metal pipes without protective coating do not meet such requirements. It is, therefore, necessary that the pipes be so coated as to resist both chemical corrosion and mechanical damage or wear.

In the assembly of an automobile, brake pipes and fuel pipes undergo a number of processing steps that include mechanical deformation such as bending and welding. Accordingly, brake pipes and fuel pipes suitable for use in motor vehicles must show good deformability without negative impact on the corrosion and wear properties.

Furthermore, environmental regulations require manufacturers of automobiles to significantly reduce or even eliminate the amount of environmentally incompatible substances in automobiles. On the list of substances that are considered environmentally incompatible is hexavalent chromium, a substance that is conventionally employed in galvanization processes used for imparting anti-corrosion properties to automobile parts. It is, therefore, desirable to produce brake pipes or fuel pipes for automobiles that do not contain any environmentally incompatible substances such as hexavalent chromium.

In addition, the automotive industry has enormous quantity demands, as in the case of brake pipes and fuel pipes. Hence, it is essential that any method of manufacturing brake pipes or fuel pipes has a high production capacity that can meet the quantity demands of the automotive industry.

U.S. Patent Nos. 3,808,057 and 4,003,760 in the names of Labenski et al. describe brake pipes for use in automobiles comprising a double-rolled steel pipe made by rolling a steel strip or hoop twice an brazing its longitudinal edges by means of a copper plating layer, or a seam welded steel pipe. The pipe has an outer surface coated with an electroplated zinc film. The film has an outer surface coated with a relatively thick special chromate film having an olive color. The chromate film has an outer surface coated with a fluorinated resin film; both of which are hereby incorporated by reference.

In U.S. Patent No. 4,853,297 to Takahashi et al. there is described a brake pipe for use in automobiles composed of a metal pipe having provided on its outer surface a copper layer, a zinc film, a chromate film, an intermediate epoxy resin layer and a polyvinyl fluoride film, formed one upon another in the order listed; hereby incorporated by reference.

In U.S. Patent No. 6,500,565 to Usui there is described a brake pipe for use in automobiles composed of a metal pipe having provided on its outer surface a chromate film containing trivalent chromium and a resin layer made of PVF or polyvinylidene fluoride; hereby incorporated by reference.

Silicates have been used in electrocleaning operations to clean steel, tin, among other surfaces. Electrocleaning is typically employed as a cleaning step prior to an electroplating operation. Using "Silicates as Cleaners in the Production of Tinplate" is described by L.J. Brown in February 1966 edition of Plating; hereby incorporated by reference.

Processes for electrolytically forming a protective layer or film by using an anodic method are disclosed by U.S. Patent No. 3,658,662 (Casson, Jr. et al.), and United Kingdom Patent No. 498,485; both of which are hereby incorporated by reference.

U.S. Patent No. 5,352,342 to Riffe, which issued on October 4, 1994 and is entitled "Method and Apparatus for Preventing Corrosion of Metal Structures", describes using electromotive forces upon a zinc solvent containing paint; hereby incorporated by reference.

The instant invention solves problems associated with conventional fluid carrying systems by providing a multilayer coated article such as a brake pipe or a fuel pipe for automobiles that has improved corrosion, wear, and processing properties and is environmentally acceptable. Further benefits of the invention will become apparent from a consideration of the ensuing description and drawings.

### SUMMARY OF THE INVENTION

The instant invention provides a corrosion resistant article comprising a metal body and a protective coating applied on at least one surface of said metal body, said protective coating comprising:
a zinc layer comprising zinc;
a silicate layer comprising at least one silicate;
a synthetic resin layer comprising at least one fluroplastic material.

In particular, the instant invention provides a multi-layer protective coating for metal articles - such as brake pipes for use in motor vehicles - which satisfies the problems discussed above in that it is highly resistant to chemical attack and can also be mechanically deformed within wide limits during various manufacturing operations without harmful effects on the protective coating, all as will be more fully explained hereinafter.

The multi-layer protective coating of the instant invention is substantially free of chromates (hexavalent and trivalent) and phosphates and, hence, is environmentally safe.

The multi-layer coated metal article of the instant invention can possess improved corrosion resistance, increased electrical resistance, heat resistance, flexibility, resistance to stress crack corrosion, adhesion to topcoats, among other properties. The treated surface imparts greater corrosion resistance (e.g., ASTM B-117), among other beneficial properties, than conventional trivalent or hexavalent chromate systems.

The invention further provides a process for manufacturing multilayer coated corrosion resistant articles, such as brake pipes for automobiles. The inventive process is a marked improvement over conventional methods by obviating the need for solvents or solvent containing systems to form a corrosion resistant layer, e.g., a mineral layer. In contrast, to conventional methods the inventive process can be substantially solvent free. By "substantially solvent free" it is meant that less than about 5 wt.%, and normally less than about 1 wt.% volatile organic compounds (V.O.C.s) are present in the electrolytic environment.

The inventive process is also a marked improvement over conventional methods by reducing, if not eliminating, chromate and/or phosphate containing compounds (and issues attendant with using these compounds such as waste disposal, worker exposure, among other undesirable environmental impacts). While the inventive process can be employed to enhance chromated or phosphated surfaces, the inventive process can replace these surfaces with a more environmentally desirable surface. The inventive process, therefore, can be "substantially chromate free" and "substantially phosphate free" and in turn produce articles that are also substantially chromate (hexavalent and trivalent) free and substantially phosphate free. The inventive process can also be substantially free of heavy metals such as chromium, lead, cadmium, cobalt, barium, among others. By substantially chromate free, substantially phosphate free and substantially heavy metal free it is meant that less than 5 wt.% and normally about 0 wt.% chromates, phosphates and/or heavy metals are present in a process for producing an article or the resultant article. In addition to obviating chromate containing processes, the inventive method forms a layer having greater heat resistance, flexibility, among other properties, than conventional chromate coatings. The improved heat resistance broadens the range of processes that can be performed subsequent to forming the inventive layer, e.g., heat cured topcoatings, bending, deforming, stamping/shaping, riveting, among other processes.

In contrast to conventional electrocleaning processes, the instant invention employs silicates in an electrolytic (e.g. cathodic) process or in an electroless process for forming a mineral layer upon the substrate. Conventional electrocleaning processes sought to avoid formation of oxide containing products such as greenalite whereas the instant invention relates to a method for forming silicate containing products, e.g., a mineral.

### CROSS REFERENCE TO RELATED PATENTS AND PATENT APPLICATIONS

The subject matter of the instant invention is related to copending and commonly assigned WIPO Patent Application Publication No. WO 98/33960, Non-Provisional U.S. Patent Application Serial Nos. 08/850,323 (Now U.S. Patent No. 6,165,257); 08/850,586 (Now U.S. Patent No. 6,143,420); and 09/016,853 (now allowed), filed respectively on May 2, 1997 and January 30, 1998, and 08/791,337 (now U.S. Patent No 5,938,976), filed on January 31, 1997, in the names of Robert L. Heimann et al., as a continuation in part of Serial No. 08/634,215 (filed on April 18, 1996) in the names of Robert L. Heimann et al., and entitled "Corrosion Resistant Buffer System for Metal Products", which is a continuation in part of Non-Provisional U.S Patent Application Serial No. 08/476,271 (filed on June 7, 1995) in the names of Heimann et al., and corresponding to WIPO Patent Application Publication No. WO 96/12770, which in turn is a continuation in part of Non-Provisional U.S. Patent Application Serial No. 08/327,438 (filed on October 21, 1994), now U.S. Patent No. 5,714,093.

The subject matter of this invention is related to Non-Provisional Patent Application Serial No. 09/016,849 (Attorney Docket No. EL004RH-1), filed on January 30, 1998 and entitled "Corrosion Protective Coatings". The subject matter of this invention is also related to Non-Provisional Patent Application Serial No. 09/016,462 (Attorney Docket No. EL005NM-1), filed on January 30, 1998 and entitled "Aqueous Gel Compositions and Use Thereof" (now U.S. Patent No. 6,033,495). The disclosure of the previously identified patents, patent applications and publications is hereby incorporated by reference.

The subject matter herein is related to U.S. Patent Application Serial Nos. 10/211,051 which corresponds to PCT/US02/24716, 10/211,094 which corresponds to PCT/US02/24671 and 10/211,029 which corresponds to PCT/US02/24446, all filed on August 02, 2002. The subject matter of this invention is related to Non-Provisional Patent Application Serial No. 09/814,641, filed on March 22, 2001, and entitled "An Energy Enhanced Process For Treating A Conductive Surface And Products Formed Thereby" (and corresponds to PCT Patent Application Serial No. PCT/US01/09293), Serial No. 09/775,072, filed on February 01, 2001 that is a continuation in part of 09/532,982, filed on March 22, 2000 that is a continuation in part of 09/369,780, filed on August 06, 1999 (now U.S. Patent No. 6,153,080) that is a continuation in part of Serial No. 09/122,002, filed on July 24, 1998 that is a continuation in part of Serial No. 09/016,250, filed on January 30, 1998 (now U.S. Patent No. 6,149,794) in the names of Robert L. Heimann et al. and entitled "An Electrolytic Process For Forming A Mineral". The subject matter herein is also related to U.S. Provisional Patent Application Serial Nos. 60/036,024, filed on January 31, 1997 and Serial No. 60/045,446, filed on May 2, 1997 and entitled ''Non-Equilibrium Enhanced Mineral Deposition". The mineral layer disclosed herein is related to U.S. Patent Application Serial No. 09/789,086, filed on February 20, 2001, and entitled "Corrosion Resistant Coatings Containing An Amorphous Phase". The disclosure (including the terms defined therein) of the previously identified publications, patents and patent applications is hereby incorporated by reference.

### BRIEF DESCRIPTION OF THE DRAWINGS

FIG. 1 is a cross sectional view of a corrosion resistant coated metal tube according to an embodiment of the instant invention as described in Example 1;
FIG. 2 is a cross sectional view of a corrosion resistant coated metal tube according to an embodiment of the instant invention as described in Examples 2, 3 and 4;
FIG. 3 is a cross sectional view of a corrosion resistant coated metal tube according to an embodiment of the instant invention as described in Example 5;
FIG. 4 is a perspective view of an example of an electroplating bath for applying a zinc and/or silicate coating on a metal tube in a continuous process in an embodiment of the process of the instant invention;
FIG. 5 is a cross sectional view of the electroplating bath shown in FIG. 4;
FIG. 6 is a perspective view of an example of an air nozzle for surface smoothing of the plastic coating on a metal tube in an embodiment of the process of the instant invention.

### DETAILED DESCRIPTION

The corrosion resistant articles according to the instant invention are usually a metal body such as steel articles or copper plated steel articles having a protective coating applied thereon, such as, for example, fluid carrying systems such as conduits, pipes and tubing that can be used as HVAC, fuel and brake lines for motor vehicles ("brake pipes").

The corrosion resistant article according to the instant invention comprises a metal body and a protective coating applied on at least one surface of said metal body. The protective coating is normally applied upon an exterior surface but can also be applied upon interior surfaces.

The metal body to be coated in accordance with the instant invention can possess a wide range of sizes and configurations, e.g., tubes, fibers, coils, sheets including perforated acoustic panels, chopped wires, drawn wires or wire strand/rope, rods, couplers (e.g., hydraulic hose couplings), fibers, particles, fasteners (including industrial and residential hardware), brackets, nuts, bolts, rivets, washers, cooling fins, stamped articles, powdered metal articles, among others.

The term "metal body" refers to a metal article or body as well as a non-metallic or non-conductive substrate having at least one surface coated with an electrically conductive material. Examples of suitable metal articles or bodies comprise at least one member selected from the group consisting of galvanized surfaces, hot-dipped galvanized, sheradized surfaces, zinc, iron, steel, brass, copper, silver, barium, calcium, strontium, titanium, zirconium, tin, lead, manganese, iron, iron alloys, nickel, tin, aluminum, lead, cadmium, magnesium, alloys thereof such as zinc-nickel alloys, tin-zinc alloys, zinc-cobalt alloys, and zinc-iron alloys, among others. Suitable non-conductive substrates having at least one surface coated with an electrically conductive material include, for example, a metallized polymeric article or sheet, ceramic materials coated or encapsulated within a metal, among others. Examples of metallized polymer comprise at least one member selected from the group of polycarbonate, acrylonitrile butadiene styrene (ABS), rubber, silicone, phenolic, nylon, PVC, polyimide, melamine, polyethylene, polyproplyene, acrylic, fluorocarbon, polysulfone, polyphenyene, polyacetate, polystyrene, epoxy, among others. Conductive surfaces can also include carbon or graphite as well as conductive polymers (polyaniline for example).

Suitable metal tubes for the production of brake pipes for motor vehicles can include, for example, single-wound metal tubes, double-wound metal tubes, electro-resistance-welded metal tubes and solid-drawn metal tubes. Suitable materials for such tubes include, for example, steel, stainless steel, SPCC steel, aluminum, iron, nickel, copper, zinc, magnesium, and alloys thereof. Furthermore, the tubes may have a copper plating layer of about 0.5 to about 10 microns, in particular of about 3 microns thickness, applied to their outer circumferential surface. In addition, there is no particular restriction on the wall thickness of the metal tube and both thin-walled and thick-walled tube may be used. Typically, metal tubes for use as brake pipes in motor vehicles will have an outer diameter of about 1 to about 30 mm, in particular of about 3 to about 12 mm and/or a wall thickness of about 0.1 to about 1.5 mm, in particular of about 0.5 to about 1.0 mm. Standard sizes of brake pipe include outer diameter size of 4.75 and 8 mm and/or a wall thickness size of 0.7 mm.

Depending on the desired properties of the corrosion resistant article and on the degree of staining it may be beneficial to clean the metal body before it enters the coating process, such as by use of suitable electrolytic degreasing; preferably with a method which avoids excessive hydrogen diffusion into the article, and decapping operations as are typically used in the art of zinc plating and having due regard to the particular metal body to be coated. If desired, the articles can be cleaned by an acid such as hydrochloric or citric acid, rinsed with water, and rinsed with an alkali such as sodium hydroxide, rinsed again with water. The cleaning and rinsing can be repeated as necessary. If desired the acid/alkali cleaning can be replaced with a conventional sonic cleaning apparatus.

In accordance with the instant invention the metal body is coated with a protective coating. The protective coating comprises at least the following layers:
- a zinc layer comprising metallic zinc;
- a silicate layer comprising at least one silicate;
- a synthetic resin layer comprising at least one fluoroplastic material.

The protective coating is not limited to the aforesaid layers but may comprise, for example, additional layers such as, for example, a primer layer interposed between the silicate layer and the synthetic resin layer.

Whereas there is no restriction with regard to the method by which the zinc layer is applied, according to one aspect of the invention the zinc layer is an electrolytically applied zinc that can be applied by conventional electrolytic methods. Such electrolytic methods are generally known and widely used in the art. The zinc layer typically has a thickness of, for example, about 1 to about 75 microns; in particular, the zinc layer typically has a thickness of, for example, about 15 to about 35 microns.

Whereas there is no restriction with regard to the method by which the silicate layer is applied, according to one aspect of the invention the silicate layer is formed by an electrolytic (e.g. cathodic) process as will be described in more detail below. The silicate layer typically has a thickness of, for example, about 50 to 800 A.

On top of the silicate layer or, alternatively, on top of an (optional) additional primer layer there is applied a synthetic resin layer containing a fluoroplastic material, such as, for example, polyvinylfluoride (PVF). The synthetic resin layer typically has a thickness of, for example, about 1 to about 50 microns.

It is believed that the presence of the silicate layer - in combination with the other layers of the protective coating - is largely responsible for such beneficial properties of the corrosion resistant article of the instant invention as improved corrosion resistance, increased electrical resistance, heat resistance, flexibility, resistance to stress crack corrosion, and adhesion of the synthetic resin layer, among other properties.

Accordingly, the instant invention also relates to a method of manufacturing a corrosion resistant article comprising a metal body and a protective coating applied on at least one surface of said metal body, said method comprising:
- electrolytically coating said metal body with zinc (or zinc alloys such as zinc nickel, zinc iron, tin zinc, among other zinc containing layers) to form a zinc layer;
- immersing the coated metal body into a medium comprising at least one silicate and having a basic pH and wherein said medium is substantially free of chromates to form a silicate layer; and
- contacting the coated metal body with a synthetic resin medium and hardening said synthetic resin medium to form a synthetic resin layer.

If desired, the zinc layer can be formed by immersion in molten zinc metal (hot dipped galvanization), mechanical plated, among other methods for forming a zinc containing layer. The coating of the metal body can be accomplished in various ways, some of which will be explained in more detail by way of example in the following:

### 1. Zinc layer

The uncoated metal bodies are first are advanced into zinc coating equipment wherein a zinc layer is applied.

For the purpose of the present invention it is desirable that the zinc layer is a finely crystalline, highly homogenous zinc layer. Whereas any suitable method can be used, zinc coating will typically be accomplished by galvanic methods, i.e. by introducing the metal body into a zinc plating bath using an acidic electrolyte containing Zn²⁺ ions and applying an electric current to cathodically precipitate fmely crystalline zinc. Furthermore, in order to obtain a finely crystalline, highly homogeneous zinc layer at an acceptable production rate, preferably one or several of the following conditions is met during galvanization: (a) a relatively high current density of about 40 to 140 A/dm² is applied; (b) the electrolyte further contains an organic additive (grain modifier); (c) the electrolyte is kept at a temperature of 50 to 60 °C; (d) the electrolyte is kept under vigorous agitation. Usually, the electrolyte used for zinc plating contains sulfuric acid.

The electrolytic zinc plating may take place in three successively arranged zinc baths which have the same chemical composition but are separated from each other in order to provide a possibility to distribute the active high current density over several current rollers. Generally, sulfuric acid zinc baths are prepared since these have an advantage over chloride and fluoro borate acid electrolytes in that they can be handled more easily within the bath passages. The sulfuric acid electrolyte is, moreover, not nearly as aggressive. Another advantage is that the precipitates from these baths are more resistant

The corrosion behavior of the zinc platings as such becomes problematic if high current densities are employed. Generally, corrosion protection which is still acceptable may be obtained at current densities around 40 A/dm², but if current densities are employed which range around 70 - 100 A/dm², the crystalline structure becomes so coarse that it can no longer be considered as an homogenous precipitate. A coarsely crystalline zinc deposit would often include electrolyte remnants that would boil-off during thermal treatments and thereby pierce a plastic coating subsequently applied, and would also cause poor adhesion of further coatings applied over the zinc. This situation can be avoided by adding organic compounds to the bath such as, for instance, saccharin, thiourea, dimethylthiourea, polyethylene imine, polypropylene imine and others. These organic compounds, which function as fine grain builders and luster additives, insure the production of a finely crystalline structure of zinc plating in spite of the use of high current densities so that it is possible to operate at high production rates. The presence of an organic compound in the electrolyte causes to some extent their introduction into the zinc plating and there exhibits an inhibiting effect.

Moreover, the high current densities usually require a very vigorous agitation of the electrolyte. Naturally, an additional cathode movement is necessary which, however, is inherent in the continuous progression treatment as the metal articles move through successive baths. Vigorous agitation of the electrolyte can be obtained by pumping it through pipes having evenly spaced holes located in the plating tanks. This kind of flow also supplies continuous fresh electrolyte and prevents impoverishment of the metal salts and additives therein. In continuously operating plants, permanent filtration of the electrolyte is necessary in order to insure uniform quality.

Examples of suitable zinc plating solutions include the following components per liter of solution:

| **Bath 1** | | **Bath 2** |
|---|---|---|
| 850g | ZnSO₄ + H₂O | 850g |
| 26g | Al₂(SO₄)₃ +14 H₂O | 26g |
| 6g | H₃BO₃ | 6g |
| 4g | ZnCl₂ | 4g |
| 0.25g | saccharin | 0.25g |
| 0.25g | thiocaramine | 0.45g |
| 0.75g | polyethylene imine | |

By the term "zinc layer" it is meant any layer that contains metallic zinc or an alloy thereof such as Zn/Ni, Zn/Fe, Sn/Zn, among other zinc containing layers. Thus, the zinc layer of the instant invention can also contain additional components besides metallic zinc. For example, it is possible to apply a Zn/Ni layer. A Zn/Ni layer can be applied in a similar manner as a Zn layer by conventional electrolytic methods that are generally known and widely used in the art. In Zn/Ni plating the electrolyte usually contains hydrochloric acid rather than sulfuric acid.

The zinc layer typically has a thickness of, for example, about 1 to about 75 microns; in particular, the zinc layer typically has a thickness of, for example, about 15 to about 35 microns.

### 2. Silicate Layer

Subsequently, the zinc plated articles ("substrates") are advanced into mineral coating equipment wherein a silicate layer ("mineral layer", "mineral coating") is applied over the zinc layer.

The silicate layer can be applied by a cathodic method for forming a protective layer upon a metallic or metal containing substrate (e.g., the protective layer can range from about 10 to about 2,500 Angstroms thick). The cathodic method is normally conducted by contacting (e.g., immersing) a substrate having an electrically conductive surface into a silicate containing bath or medium wherein a current is introduced to (e.g., passed through) the bath and the substrate is the cathode.

The inventive process can form a mineral layer comprising an amorphous matrix surrounding or incorporating metal silicate crystals upon the substrate. The characteristics of the mineral layer are described in greater detail in the copending and commonly assigned patent applications listed below.

The instant invention relates to a process for depositing or forming a beneficial surface (e.g., a mineral containing coating or film) upon a metallic or an electrically conductive surface. The process employs a silicate medium, e.g., containing soluble mineral components or precursors thereof, and utilizes an electroless or an electrically enhanced method to treat an electrically conductive surface (e.g., to obtain a mineral coating or film upon a metallic or conductive surface). By "mineral containing coating", "mineralized film" or "mineral" it is meant to refer to a relatively thin coating or film which is formed upon a metal or conductive surface wherein at least a portion of the coating or film comprises at least one metal containing mineral, e.g., an amorphous phase or matrix surrounding or incorporating crystals comprising a zinc disilicate. Mineral and Mineral Containing are defined in the previously identified Copending and Commonly Assigned Patents and Patent Applications; incorporated by reference. By "electrolytic" or "electrodeposition" or "electrically enhanced", it is meant to refer to an environment created by introducing or passing an electrical current through a silicate containing medium while in contact with an electrically conductive substrate (or having an electrically conductive surface) and wherein the substrate functions as the cathode. By "metal containing", "metal", or "metallic", it is meant to refer to sheets, shaped articles, fibers, rods, particles, continuous lengths such as coil and wire, metallized surfaces, among other configurations that are based upon at least one metal and alloys including a metal having a naturally occurring, or chemically, mechanically or thermally modified surface. Typically a naturally occurring surface upon a metal will comprise a thin film or layer comprising at least one oxide, hydroxides, carbonates, sulfates, chlorides, among others. The naturally occurring surface can be removed or modified by using the inventive process.

The electrolytic environment can be established in any suitable manner including immersing the substrate, applying a silicate containing coating upon the substrate and thereafter applying an electrical current, among others. The preferred method for establishing the environment will be determined by the size of the substrate, electrodeposition time, applied voltage, among other parameters known in the electrodeposition art. The effectiveness of the electrolytic environment can be enhanced by supplying energy in the form of ultrasonic, laser, ultraviolet light, RF, IR, among others. The inventive process can be operated on a batch or continuous basis.

The silicate containing medium can be a fluid bath, gel, spray, among other methods for contacting the substrate with the silicate medium. Examples of the silicate medium comprise a bath containing at least one silicate, a gel comprising at least one silicate and a thickener, among others. The medium can comprise a bath comprising at least one of ammonium silicate, potassium silicate, calcium silicate, lithium silicate, sodium silicate, compounds releasing silicate moieties or species, among other silicates. The bath can comprise any suitable polar carrier such as water, alcohol, ethers, among others. Normally, the bath comprises sodium silicate and de-ionized water and optionally at least one dopant. Typically, the at least one dopant is water soluble or dispersible within an aqueous medium.

The silicate containing medium typically has a basic pH. Normally, the pH will range from greater than about 9 to about 13 and typically, about 10 to about 11. The medium is normally aqueous and can comprise at least one water soluble or dispersible silicate in an amount from greater than 0 to about 40 wt.%, usually, about 3 to 15 wt.% and typically about 10wt.%. The silicate medium can further comprise at least one water dispersible or soluble dopant. The silicate containing medium is also normally substantially free of heavy metals, chromates and/or phosphates.

The silicate containing medium can also include silica. The silica can be colloidal with a particle size ranging from about 10nm to about 50nm. The size of particles in the medium ranges from about 10nm to 1 micron and typically about 0.05 to about 0.2 micron. The medium can have a turbidity of about 10 to about 850, typically about 50 to about 300 Nephelometric Turbidity Units (NTU) as determined in accordance with conventional procedures.

The electrolytic environment can be preceded by and/or followed with conventional post and/or pre-treatments known in this art such as cleaning or rinsing, e.g., immersion/spray within the treatment, sonic cleaning, double counter-current cascading flow; alkali or acid treatments, among other treatments. By employing a suitable post-treatment the solubility, corrosion resistance (e.g., reduced white rust formation when treating zinc containing surfaces), sealer and/or topcoat adhesion, among other properties of surface of the substrate formed by the inventive method can be improved. If desired, the post-treated surface can be sealed, rinsed and/or topcoated, e.g., silane, epoxy, latex, fluoropolymer, acrylic, titanates, zirconates, carbonates, among other coatings.

In one aspect of the invention, a pre-treatment comprises exposing the substrate to be treated to at least one of an acid, oxidizer, among other compounds. The pre-treatment can be employed for removing excess oxides or scale, equipotentialize the surface for subsequent mineralization treatments, convert the surface into a mineral precursor, among other benefits. Conventional methods for acid cleaning metal surfaces are described in ASM, Vol. 5, Surface Engineering (1994), and U.S. Patent No. 6,096,650; hereby incorporated by reference.

In one aspect of the invention, the post treatment comprises exposing the substrate to a source of at least one carbonate or precursors thereof. Examples of carbonate comprise at least one member from the group of gaseous carbon dioxide, lithium carbonate, lithium bicarbonate, sodium carbonate, sodium bicarbonate, potassium carbonate, potassium bicarbonate, rubidium carbonate, rubidium bicarbonate, rubidium acid carbonate, cesium carbonate, ammonium carbonate, ammonium bicarbonate, ammonium carbamate and ammonium zirconyl carbonate. Normally, the carbonate source will be water soluble. In the case of a carbonate precursor such as carbon dioxide, the precursor can be passed through a liquid (including the silicate containing medium) and the substrate immersed in the liquid. One specific example of a suitable postreatment is disclosed in U.S. Patent No. 2,462,763; hereby incorporated by reference. Another specific example of a post treatment comprises exposing a treated surface to a solution obtained by diluting ammonium zirconyl carbonate (1:4) in distilled water (e.g., Bacote® 20 supplied by Magnesium Elektron Corp). If desired, this post treated surface can be topcoated (e.g., aqueous or water borne topcoats).

In another aspect of the invention, the post treatment comprises heating the surface. Typically the amount of heating is sufficient to densify the inventive surface without adversely affecting the physical properties of the underlying metal substrate. Heating can occur under atmospheric conditions, within a nitrogen containing environment, among other gases. If desired, prior to heating the inventive surface can be contacted with a solution containing a material that reacts with the surface at elevated temperatures.

In another aspect of the invention, the post treatment comprises exposing the substrate to a source comprising at least one acid source or precursors thereof. Examples of suitable acid sources comprise at least one member chosen from the group of phosphoric acid, hydrochloric acid, molybdic acid, silicic acid, acetic acid, citric acid, nitric acid, hydroxyl substituted carboxylic acid, glycolic acid, lactic acid, malic acid, tartaric acid, among other acid sources effective at improving at least one property of the treated metal surface. The pH of the acid post treatment can be modified by employing at least one member selected from the group consisting of ammonium citrate dibasic (available commercially as Citrosol® #503 and Multiprep®), fluoride salts such as ammonium bifluoride, fluoboric acid, fluorosilicic acid, among others. The acid post treatment can serve to activate the surface thereby improving the effectiveness of rinses, sealers and/or topcoatings (e.g., surface activation prior to contacting with a sealer can improve cohesion between the surface and the sealer thereby improving the corrosion resistance of the treated substrate). Normally, the acid source will be water soluble and employed in amounts of up to about 5 wt.% and typically, about 1 to about 2 wt.%.

In another aspect of the invention, the post treatment comprises contacting a surface treated by the inventive process with a rinse. By "rinse" it is meant that an article or a treated surface is sprayed, dipped, immersed or other wise exposed to the rinse in order to affect the properties of the treated surface. For example, a surface treated by the inventive process is immersed in a bath comprising at least one rinse. In some cases, the rinse can interact or react with at least a portion of the treated surface. Further the rinsed surfaced can be modified by multiple rinses, heating, topcoating, adding dyes, lubricants and waxes, among other processes. Examples of suitable compounds for use in rinses comprise at least one member selected from the group of titanates, titanium chloride, tin chloride, zirconates, zirconium acetate, zirconium oxychloride, fluorides such as calcium fluoride, tin fluoride, titanium fluoride, zirconium fluoride; coppurous compounds, ammonium fluorosilicate, metal treated silicas (e.g., Ludox® ), silanes, siloxanes, nitrates such as aluminum nitrate; sulphates such as magnesium sulphate, sodium sulphate, zinc sulphate, and copper sulphate; lithium compounds such as lithium acetate, lithium bicarbonate, lithium citrate, lithium metaborate, lithium vanadate, lithium tungstate, among others. The rinse can further comprise at least one organic compound such as vinyl acrylics, fluorosurfactancts, polyethylene wax, among others. Examples of commercially available rinses comprise at least one member selected from the group of Aqualac® (urethane containing aqueous solution), W86®, W87®, B37®, T01®, E10®, among others (a heat cured coating supplied by the Magni® Group), JS2030S (sodium silicate containing rinse supplied by MacDermid Incorporated), JS2040I (a molybdenum containing rinse also supplied by MacDermid Incorporated), EnSeal® C-23 (an acrylic based coating supplied by Enthone), EnSeal® C-26, Enthone® C-40 (a pigmented coating supplied Enthone), Microseal® , Paraclene® 99 (a chromate containing rinse), EcoTri® (a silicate/polymer rinse), MCI Plus OS (supplied by Metal Coatings International), among others. One specific rinse comprises water, water dispersible urethane, and at least one silicate, e.g., refer to commonly assigned U.S. Patent No. 5,871,668; hereby incorporated by reference. While the rinse can be employed neat, normally the rinse will be dissolved, diluted or dispersed within another medium such as water, organic solvents, among others. While the amount of rinse employed depends upon the desired results, normally the rinse comprises about 0.1 wt% to about 50 wt.% of the rinse medium. The rinse can be employed as multiple applications and, if desired, heated.

The metal surface refers to a metal article or body as well as a non-metallic or an electrically conductive member having an adhered metal or conductive layer. While any suitable surface can be treated by the inventive process, examples of suitable metal surfaces comprise at least one member selected from the group consisting of galvanized surfaces (e.g. the zinc plated metal article from the previous step), sheradized surfaces, zinc, iron, steel, brass, copper, nickel, tin, aluminum, lead, cadmium, magnesium, alloys thereof such as zinc-nickel alloys, tin-zinc alloys, zinc-cobalt alloys, zinc-iron alloys, among others. If desired, the mineral layer can be formed on a non-conductive substrate having at least one surface coated with an electrically conductive material, e.g., a metallized polymeric article or sheet, ceramic materials coated or encapsulated within a metal, among others. Examples of metallized polymer comprise at least one member selected from the group of polycarbonate, acrylonitrile butadiene styrene (ABS), rubber, silicone, phenolic, nylon, PVC, polyimide, melamine, polyethylene, polyproplyene, acrylic, fluorocarbon, polysulfone, polyphenyene, polyacetate, polystyrene, epoxy, among others. Conductive surfaces can also include carbon or graphite as well as conductive polymers (polyaniline for example).

The metal surface can possess a wide range of sizes and configurations, e.g., fibers, coils, sheets including perforated acoustic panels, chopped wires, drawn wires or wire strand/rope, rods, couplers (e.g., hydraulic hose couplings), fibers, particles, fasteners (including industrial and residential hardware), brackets, nuts, bolts, rivets, washers, cooling fins, stamped articles, powdered metal articles, among others. The limiting characteristic of the inventive process to treat a metal surface is dependent upon the ability of the electrical current/energy to contact the metal surface. That is, similar to conventional electroplating technologies, a mineral surface may be difficult to apply upon a metal surface defining hollow areas or voids. This difficulty can be addressed by using a conformal anode.

The inventive process creates a flexible surface that can survive secondary processes, e.g., metal deformation for riveting, sweging, crimping, among other processes, and continue to provide corrosion protection. Such is in contrast to typical corrosion inhibitors such as chromates that tend to crack when the underlying surface is shaped. If desired, the surface formed by the inventive process can be topcoated (e.g, with a fluoroplastic resin), prior to secondary processing. Articles treated in accordance with the inventive process, topcoated and exposed to a secondary process retain their desirable corrosion resistance, coating adhesion, component functionality, among properties.

The inventive process provides a surface (e.g., mineral coating) that can enhance the surface characteristics of the metal or conductive surface such as resistance to corrosion, protect carbon (fibers for example) from oxidation, stress crack corrosion (e.g., stainless steel), hardness, thermal resistance, improve bonding strength in composite materials, provide dielectric layers, improve corrosion resistance of printed circuit/wiring boards and decorative metal finishes, and reduce the conductivity of conductive polymer surfaces including application in sandwich type materials.

The mineral coating can also affect the electrical and magnetic properties of the surface. That is, the mineral coating can impart electrical resistance or insulative properties to the treated surface. By having an electrically non-conductive surface, articles having the inventive layer can reduce, if not eliminate, electro-galvanic corrosion in fixtures wherein current flow is associated with corrosion, e.g., bridges, pipelines, among other articles.

In one aspect of the invention, the inventive process is employed for improving the cracking and oxidation resistance of aluminum, copper or lead containing substrates. For example, lead, which is used extensively in battery production, is prone to corrosion that in turn causes cracking, e.g., inter-granular corrosion. The inventive process can be employed for promoting grain growth of aluminum, copper and lead substrates as well as reducing the impact of surface flaws. Without wishing to be bound by any theory or explanation, it is believed that the lattice structure of the mineral layer formed in accordance with the inventive process on these 3 types of substrates can be a partially polymerized silicate. These lattices can incorporate a disilicate structure, or a chain silicate such as a pyroxene. A partially polymerized silicate lattice offers structural rigidity without being brittle. In order to achieve a stable partially polymerized lattice, metal cations would preferably occupy the lattice to provide charge stability. Aluminum has the unique ability to occupy either the octahedral site or the tetrahedral site in place of silicon. The +3 valence of aluminum would require additional metal cations to replace the +4 valance of silicon. In the case of lead application, additional cation can comprise +2 lead ion.

In an aspect of the invention, an electrogalvanized panel, e.g., a zinc surface, is coated electrolytically by being placed into an aqueous sodium silicate solution. After being placed into the silicate solution, a mineral coating or film containing silicates is deposited by using relatively low voltage potential (e.g., about 1 to about 24 v depending upon the desired current density) and low current. The current density can range from about 0.7A/in² to about 0.1 A/in² at 12 volt constant. Normally, hydrogen is evolved at the workpiece/cathode and oxygen at the anode.

In one aspect of the invention, the workpiece is initially employed as an anode and then electrically switched (or pulsed) to the cathode. By pulsing the voltage, the workpiece can be pre-treated in-situ (prior to interaction with the electrolytic medium). Pulsing can also increase the thickness of the film or layer formed upon the workpiece. If desired, dopants (e.g., cations) can be present in the electrolyte and deposited upon the surface by pulsing either prior to or following mineralization.

In another aspect of the invention, the metal surface, e.g., zinc, aluminum, magnesium, steel, lead and alloys thereof; has an optional pretreatment. By "pretreated" it is meant to refer to a batch or continuous process for conditioning the metal surface to clean it and condition the surface to facilitate acceptance of the mineral or silicate containing coating e.g., the inventive process can be employed as a step in a continuous process for producing corrosion resistant coil steel. The particular pretreatment will be a function of composition of the metal surface and desired functionality of the mineral containing coating/film to be formed on the surface. Examples of suitable pre-treatments comprise at least one of cleaning, e.g., sonic cleaning, activating, heating, degreasing, pickling, deoxidizing, shot glass bead blasting, sand blasting and rinsing. One suitable pretreatment process for steel comprises:
1) 2 minute immersion in a 3:1 dilution of Metal Prep 79 (Parker Amchem),
2) two deionized water rinses,
3) 10 second immersion in a pH 14 sodium hydroxide solution,
4) remove excess solution and allow to air dry,
5) 5 minute immersion in a 50% hydrogen peroxide solution,
6) remove excess solution and allow to air dry.

In another aspect of the invention, the metal surface is pretreated by anodically cleaning the surface. Such cleaning can be accomplished by immersing the work piece or substrate into a medium comprising silicates, hydroxides, phosphates, carbonates, among other cleaning agents. By using the work piece as the anode in a DC cell and maintaining a current of about 10A/ft² to about 150A/ft², the process can generate oxygen gas. The oxygen gas agitates the surface of the workpiece while oxidizing the substrate's surface. The surface can also be agitated mechanically by using conventional vibrating equipment. If desired, the amount of oxygen or other gas present during formation of the mineral layer can be increased by physically introducing such gas, e.g., bubbling, pumping, among other means for adding gases.

In a further pre-treatment aspect of the invention, the work piece is exposed to the inventive silicate medium as an anode thereby cleaning the work piece (e.g., removing naturally occurring compounds). The work piece can then converted to the cathode and processed in accordance with the inventive methods.

In a further aspect of the invention, the silicate medium is modified to include at least one dopant material. The amount of dopant can vary depending upon the properties of the dopant and desired results. Typically, the amount of dopant will range from about 0.001 wt.% to about 5 wt.% (or greater so long as the electrolyte is not adversely affected. Examples of suitable dopants comprise at least one member selected from the group of water soluble salts, oxides and precursors of tungsten, molybdenum, chromium, titanium (titatantes), zircon, vanadium, phosphorus, aluminum (aluminates), iron (e.g., iron chloride), boron (borates), bismuth, gallium, tellurium, germanium, antimony, niobium (also known as columbium), magnesium and manganese, sulfur, zirconium (zirconates) mixtures thereof, among others, and usually, salts and oxides of aluminum and iron. The dopant can comprise at least one of molybdenic acid, fluorotitanic acid and salts thereof such as titanium hydrofluoride, ammonium fluorotitanate, ammonium fluorosilicate and sodium fluorotitanate; fluorozirconic acid and salts thereof such as H₂ZrF₆, (NH₄)₂ZrF₆ and Na₂ZrF₆; among others. Alternatively, dopants can comprise at least one substantially water insoluble material such as electropheritic transportable polymers, PTFE, boron nitride, silicon carbide, silicon nitride, aluminum nitride, titanium carbide, diamond, titanium diboride, tungsten carbide, metal oxides such as cerium oxide, powdered metals and metallic precursors such as zinc, among others.

The aforementioned dopants that can be employed for enhancing the mineral layer formation rate, modifying the chemistry and/or physical properties of the resultant layer, as a diluent for the electrolyte or silicate containing medium, among others. Examples of such dopants are iron salts (ferrous chloride, sulfate, nitrate), aluminum fluoride, fluorosilicates (e.g., K₂SiF₆), fluoroaluminates (e.g., potassium fluoroaluminate such as K₂AlF₅-H₂O), mixtures thereof, among other sources of metals and halogens. The dopant materials can be introduced to the metal or conductive surface in pretreatment steps prior to electrodeposition, in post treatment steps following electrodeposition (e.g., rinse), and/or by alternating electrolytic contacts in solutions of dopants and solutions of silicates if the silicates will not form a stable solution with the dopants, e.g., one or more water soluble dopants. The presence of dopants in the electrolyte solution can be employed to form tailored surfaces upon the metal or conductive surface, e.g., an aqueous sodium silicate solution containing aluminate can be employed to form a layer comprising oxides of silicon and aluminum. That is, at least one dopant (e.g., zinc) can be co-deposited along with at least one siliceous species (e.g., a mineral) upon the substrate.

Moreover, the aforementioned rinses can be modified by incorporating at least one dopant. The dopant can employed for interacting or reacting with the treated surface. If desired, the dopant can be dispersed in a suitable medium such as water and employed as a rinse.

The silicate medium can be modified by adding water/polar carrier dispersible or soluble polymers, and in some cases the electro-deposition solution itself can be in the form of a flowable gel consistency having a predetermined viscosity. If utilized, the amount of polymer or water dispersible materials normally ranges from about 0 wt.% to about 10 wt.%. Examples of polymers or water dispersible materials that can be employed in the silicate medium comprise at least one member selected from the group of acrylic copolymers (supplied commercially as Carbopol® ), hydroxyethyl cellulose, clays such as bentonite, fumed silica, solutions comprising sodium silicate (supplied commercially by MacDermid as JS2030S), among others. A suitable composition can be obtained in an aqueous composition comprising about 3 wt% N-grade Sodium Silicate Solution (PQ Corp), optionally about 0.5 wt% Carbopol EZ-2 (BF Goodrich), about 5 to about 10 wt.% fumed silica, mixtures thereof, among others. Further, the aqueous silicate solution can be filled with a water dispersible polymer such as polyurethane to electro-deposit a mineral-polymer composite coating. The characteristics of the electro-deposition solution can also be modified or tailored by using an anode material as a source of ions which can be available for codeposition with the mineral anions and/or one or more dopants. The dopants can be useful for building additional thickness of the electrodeposited mineral layer.

The silicate medium can also be modified by adding at least one diluent or electrolyte. Examples of suitable diluent comprise at least one member selected from the group of sodium sulphate, surfactants, de-foamers, colorants/dyes, among others. The diluent (e.g., sodium sulfate) can be employed for improving the electrical conductivity of bath, reducing the affects of contaminants entering the silicate medium, reducing bath foam, among others. When the diluent is employed as a defoamer, the amount normally comprises less than about 5 wt.% of the electrolyte, e.g., about 1 to about 2 wt.%. A diluent for affecting the electrical conductivity of the bath or electrolyte is normally in employed in an amount of about 0 wt.% to about 20 wt.%.

The following sets forth the parameters which may be employed for tailoring the inventive process to obtain a desirable mineral containing coating:
1 .Voltage
2. Current Density
3. Apparatus or Cell Design
4. Deposition Time
5. Programmed current and voltage variations during processing
6. Concentration of the silicate solution
7. Type and concentration of anions in solution
8. Type and concentration of cations in solution
9. Composition/surface area of the anode
10. Composition/surface area of the cathode
11. Temperature
11. Pressure
12. Type and Concentration of Surface Active Agents

The specific ranges of the parameters above depend upon the substrate to be treated, and the intended composition to be deposited. Normally, the temperature of the electrolyte bath ranges from about 25 to about 95 °C (e.g., about 75 °C), the voltage from about 6 to 24 volts, an electrolyte solution concentration from about 5 to about 15 wt.% silicate, the current density ranges from about 0.025A/in² and greater than 0.60A/in² (e.g., about 180 to about 200 mA/cm2 and normally about 192 mA/cm²), contact time with the electrolyte from about 10 seconds to about 50 minutes and normally about 1 to about 15 minutes and anode to cathode surface area ratio of about 0.5:1 to about 2:1. Items 1, 2, 7, and 8 can be especially effective in tailoring the chemical and physical characteristics of the coating. That is, items 1 and 2 can affect the deposition time and coating thickness whereas items 7 and 8 can be employed for introducing dopants that impart desirable chemical characteristics to the coating. The differing types of anions and cations can comprise at least one member selected from the group consisting of Group I metals, Group II metals, transition and rare earth metal oxides, oxyanions such as molybdate, phosphate, titanate, boron nitride, silicon carbide, aluminum nitride, silicon nitride, mixtures thereof, among others.

The typical process conditions will provide an environment wherein hydrogen is evolved at the cathode and oxygen at the anode. Without wishing to be bound by any theory or explanation, it is believed that the hydrogen evolution provides a relatively high pH at the surface to be treated. It is also believed that the oxygen reduced or deprived environment along with a high pH can cause an interaction or a reaction at the surface of the substrate being treated. It is further believed that zinc can function as a barrier to hydrogen thereby reducing, if not eliminating, hydrogen embrittlement being caused by operating the inventive process.

The inventive process can be modified by employing apparatus and methods conventionally associated with electroplating processes. Examples of such methods include pulse plating, horizontal plating systems, barrel, rack, adding electrolyte modifiers to the silicate containing medium, employing membranes within the bath, among other apparatus and methods.

The inventive process can be modified by varying the composition of the anode. Examples of suitable anodes comprise graphite, platinum, zinc, iron, steel, iridium oxide, beryllium oxide, tantalum, niobium, titanium, nickel, Monel® alloys, pallidium, alloys thereof, among others. The anode can comprise a first material clad onto a second, e.g., platinum plated titanium or platinum clad niobium mesh. The anode can possess any suitable configuration, e.g., mesh adjacent to a barrel plating system. In some cases, the anode (e.g., iron or nickel) can release ions into the electrolyte bath that can become incorporated within the mineral layer. Normally, ppm concentrations of anode ions are sufficient to affect the mineral layer composition. If a dimensionally stable anode is desired, then platinum clad or plated niobium can be employed. In the event a dimensionally stable anode requires cleaning, in most cases the anode can be cleaned with sodium hydroxide solutions. Anode cleaning can be enhanced by using heat and/or electrical current.

The inventive process can be practiced in any suitable apparatus. Examples of suitable apparatus comprise rack and barrel plating, brush plating, horizontal plating, continuous lengths, among other apparatus conventionally used in electroplating metals. The workpiece is subjected to the inventive electrolytic method thereby forming a mineral coating upon at least a portion of the workpiece surface. After formation of the mineral coating the workpiece is removed from the electrolytic environment, dried and rinsed with water, e.g, a layer comprising, for example, silica and/or sodium carbonate can be removed by rinsing.

Whether or not the workpiece is rinsed, the inventive process can impart improved corrosion resistance without using chromates (hex or trivalent). When a zinc surface is treated by the inventive process, the thickness (or total amount) of zinc can be reduced while achieving equivalent, if not improved, corrosion resistance. For example, when exposing a steel article to a zinc plating environment for a period of about 2.5 to about 30 minutes and then to the inventive process for a period of about 2.5 to about 30 minutes white rust first occurs from about 24 hours to about 120 hours (when tested in accordance with ASTM B-117), and red rust failure occurs from about 100 to about 800 hours. As a result, the inventive process permits tailoring the amount of zinc to a desired level of corrosion resistance. If desired, the corrosion resistance can be improved further by applying at least one topcoating.

The inventive process also imparts improved torque tension properties in comparison to conventional chromate processes (hex or trivalent). Wilson-Gamer M10 bolts were coated with conventional zinc and yellow hexavalent chromate, and treated in accordance with the inventive process. The torque tension of these bolts was tested in accordance with test protocol USCAR-11 at forces from about 20,000 to about 42,300 Newtons. The standard deviation for the peak torque for the conventional zinc/yellow chromate treated bolts was about 5.57 Nm with a three-sigma range of about 33.4, and about 2.56 Nm with a three-sigma range of 15.4 for bolts treated in accordance with the inventive process.

The surface formed by the inventive process may or may not be rinsed prior to applying a topcoat. Normally; the surface formed by the inventive process will be rinsed, e.g., with at least one of deionized water, silane or a carbonate, prior to applying a topcoat, e.g. a fluoroplastic resin.

Without wishing to be bound by any theory or explanation a silica containing layer can be formed upon the mineral. The silica containing layer can be chemically or physically modified and employed as an intermediate or tie-layer. The tie-layer can be used to enhance bonding to paints, coatings; metals, glass, among other materials contacting the tie-layer. This can be accomplished by binding to the top silica containing layer one or more materials which contain alkyl, fluorine, vinyl, epoxy including two-part epoxy and powder paint systems, silane, hydroxy, amino, mixtures thereof, among other functionalities reactive to silica or silicon hydroxide. Alternatively, the silica containing layer can be removed by using conventional cleaning methods, e.g, rinsing with de-ionized water. The silica containing tie-layer can be relatively thin in comparison to the mineral layer 100-500 angstroms compared to the total thickness of the mineral which can be 1500-2500 angstroms thick. If desired, the silica containing layer can be chemically and/or physically modified by employing the previously described post-treatments, e.g., exposure to at least one carbonate or acid source. The post-treated surface can then be contacted with a topcoat, e.g, a fluoroplastic resin.

In another aspect, the mineral without or without the aforementioned silica layer functions as an intermediate or tie-layer for one or more secondary coatings, e.g., silane containing secondary coatings. Examples of such secondary coatings and methods that can be complimentary to the instant invention are described in U.S. Patent Nos. 5,759,629; 5,750,197; 5,539,031; 5,498,481; 5,478,655; 5,455,080; and 5,433,976. The disclosure of each of these U.S. Patents is hereby incorporated by reference. For example, improved corrosion resistance of a metal substrate can be achieved by using a secondary coating comprising at least one suitable silane in combination with a mineralized surface. Examples of suitable silanes comprise at least one members selected from the group consisting of tetra-ortho-ethyl-silicate (TEOS), bis-1,2-(triethoxysilyl) ethane (BSTE), vinyl silane or aminopropyl silane, epoxy silanes, alkoxysilanes, among other organo functional silanes. The silane can bond with the mineralized surface and then the silane can cure thereby providing a protective top coat, or a surface for receiving an outer coating or layer. In some cases, it is desirable to sequentially apply the silanes. For example, a steel substrate, e.g., a fastener, can be treated to form a mineral layer, allowed to dry, rinsed in deionized water, coated with a 5% BSTE solution, coated again with a 5% vinyl silane solution, and powder coated with a thermoset epoxy paint (Corvel 10-1002 by Morton) at a thickness of 2 mils. The steel substrate was scribed using a carbide tip and exposed to ASTM B117 salt spray for 500 hours. After the exposure, the substrates were removed and rinsed and allowed to dry for 1 hour. Using a spatula, the scribes were scraped, removing any paint due to undercutting, and the remaining gaps were measured. The tested substrates showed no measurable gap beside the scribe.

The inventive process forms a surface that has improved adhesion to outer coatings or layers, e.g., secondary coatings such as, for example, fluoroplastic resins. By selecting appropriate rinses, secondary and outer coatings for application upon the mineral, a corrosion resistant article can be obtained without chromating or phosphating. Such a selection can also reduce usage of zinc to galvanize iron containing surfaces, e.g., a steel surface is mineralized, coated with a silane containing coating and with an outer coating comprising an epoxy.

Without wishing to be bound by any theory or explanation, it is believed that the inventive process forms a surface that can release or provide water or related moieties. These moieties can participate in a hydrolysis or condensation reaction that can occur when an overlying rinse, seal or topcoating cures. Such participation improves the cohesive bond strength between the surface and overlying cured coating.

In one aspect of the invention, the mineral coating of the zinc plated article obtained in step 1 is effected by (a) immersing the article in an alkaline aqueous medium containing silicate (e.g. sodium silicate); (b) introducing an electric current to said medium wherein said article is employed as a cathode and thereby forming a silicate layer on the surface of the article; (c) rinsing the article with water; (d) drying the article.

Whereas a person of skill in the art will appreciate that a wide variation of process parameters is possible, the following parameters, alone or in combination, were found to be useful in producing a silicate layer in the protective coating of brake pipes for motor vehicles:
- silicate concentration in medium: 1 to 25 wt.%;
- pH of medium: 10 to 11.5
- current density: 1.5 to 2.5 A/dm²
- temperature of medium: 70 to 80 °C.
- thickness of silicate layer formed: 50 to 800 Angstroms
- drying temperature: > 120 °C, in particular 120 to 140 °C

The silicate coated article is rinsed with fresh water and then dried immediately after its formation. Drying can be effected, for example, in an oven or by blowing hot air over the coated article. It was found that the subsequent steps of rinsing and drying the article after silicate layer formation can lead to an improved contact with the next layer of synthetic resin. If desired, the silicate coating article can be dried prior to rinsing (e.g., immediately dried after its formation and then rinsed). Care should be taken to ensure that drying is sufficient to prevent water or silicate solution remaining on the article in amounts that would deleteriously affect the plastic coating next applied.

### 4. Synthetic Resin Layer

After the silicate coating is dried, a coating of synthetic resin is applied over the silicate layer.

The synthetic resin applied according to this invention comprises a fluoroplastic material by which term is meant, utilizing the ASTM definition, resins that are paraffinic hydrocarbons in which all or part of the hydrogen atoms have been replaced with fluorine atoms and which may also include chlorine atoms in their structure. The term "fluoroplastic materials" thus includes fluorocarbon resins such as, for example, polytetrafluorethylene (PTFE), fluorinated ethylene propylene (FEP), and polyhexafluoropropylene; flurohydrocarbon resins such as, for example, polyvinyl fluoride (PVF), polyvinylidene fluoride (PVDF), and polytrifluorostyrene; chlorofluorocarbon resins such as, for example, polychlorotrifluoroethylene (PCTFE); chlorofluorohydrocarbon resins, combinations thereof, among other fluoropolymers.

Such fluoroplastic materials have the advantage that a homogenous, closely pored surface forms even when the plastic film is very thin. Due to the property that these fluoroplastic materials do not absorb water (they cannot be conditioned) the water of crystallinity remains within the silicate layer under the synthetic resin coating. Thus, it is often sufficient to apply the synthetic resin layer at a thickness of about 1 to about 50 microns, in particular about 10 to about 20 microns.

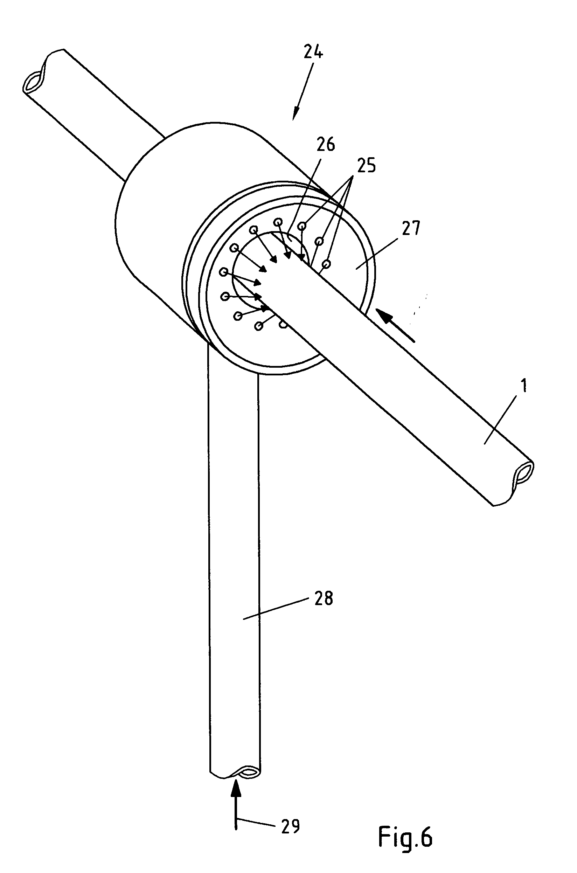

The synthetic resin coating can be applied as a dispersion, preferably in a high boiling solvent (e.g. propylene carbonate, diethylene glycol, diethyl phtalate and mixtures thereof). A suitable example of a synthetic resin coating dispersion is a dispersion of polyvinylfluoride resin having a solid content of 40% by weight and a grain size < 2 microns in a solvent mixture such as propylene carbonate (56%) and diethylene glycol (4%). The silicate coating should be thoroughly wetted with the fluoroplastics coating. The fluoroplastics coating should be applied evenly to the article, and suitable air nozzles may be employed to smooth out the surface of the coating. A suitable apparatus that can be used for surface smoothing of the coating is depicted in Fig. 6, a detailed description of which will follow in the discussion of the specific examples below.

The coated article is next subjected to thermal treatment to solidify the fluoroplastic coating and cause it to interlock with and adhere to the silicate coating. The coated article is heated for a short time at a temperature of about 100 °C to 200 °C, but most usefully at a temperature near 250 °C, to evaporate the solvent and jell the fluoroplastic coating without impairing the silicate coating. The upper generally known temperature limit for the specific fluoroplastic used should be observed so as to prevent thermal decomposition of the material. The drying takes place in such a manner that the water of crystallization is not displaced from the silicate coating because without its presence, the chromate coating could separate from the previously zinc plated article in the form of a powder.

Thermal treatment is accomplished by passing the coated article through an oven, and the article is maintained therein for a short time to prevent sagging of the coating. Also, short drying time prevents loss of water of crystallization from the silicate layer. High circulation of hot air at a temperature of about 380 °C yields article surface temperatures of about 250 °C when the article is in the drying oven for 8 to 10 seconds and leads to rapid coagulation of the plastic coating. The actual time in the drying oven is increased by the time needed to heat the article, which varies with the running speed of the article and thickness of the synthetic resin coating, being about 20 seconds for an article with a 14 to 18 microns thick synthetic resin coating moving at 11m/min.

According to one embodiment of the invention the resin coated article is subjected to thermal treatment in a temperature gradient oven. In the temperature gradient oven the article is first heated to a lower temperature that is sufficient for the solvent to evaporate (e.g. 220-225 °C in the case of a PVF dispersion in propylene carbonate) and, subsequently, to a higher temperature that is sufficient for the resin to melt (e.g. 240-245 °C in the case of a PVF dispersion in propylene carbonate).

After the thermal treatment, the coated articles are allowed to cool down to room temperature whereby the resin coating solidifies and the plastic coating solidifies with the silicate layer. One or several additional plastic coatings can thereafter be applied if so desired.

### 5. Primer Layer

Optionally, the protective coating further comprises a primer layer that is interposed between the silicate layer and the synthetic resin layer. Applying such a primer layer can further enhance the strength of adherence between the silicate layer and the synthetic resin layer and can further enhance the corrosion resistance of the article.

Suitable primer compositions are well known in the art and include, for example, epoxy resins, polyamide resins, silane coupling agents, titanium coupling agents and mixtures thereof. Suitable epoxy resin compositions include, for example, bisphenol-A type, bisphenol-F type, bisphenol-AD type, phenol novolac based, cresol novolac based, brominated bisphenol-A type and polyglycol epoxy resins.

The application of the primer layer can be effected by any suitable method such as extrusion molding, spraying, showering, immersing, brush-coating, powder-coating or hot-melting. In case of using, for example, epoxy polyester, the primer can be formed by dipping, coating and heat treating at 250 °C for 90 seconds.

Typically, the primer layer is applied at a thickness of, for example, about 1 to about 20 microns.

High production rates can be obtained by a further development of the above method wherein the individual method steps are carried out sequentially in continuous progression. Thus, where tubing is to be coated, pieces of tubing can be connected together end to end and transported through the galvanizing plant, mineralizing zone, plastic coating and thermal treatment line. The continuous progression which represents a constant velocity of the base body during its movement through the individual method steps is significant because it affords an optimal manner of introducing the dried, just chromated body into the plastic dispersion and thereafter drying the chromating in such a manner that the water of crystallization therein is not displaced. The continuous mode of operation, moreover, insures a uniform quality at all times.

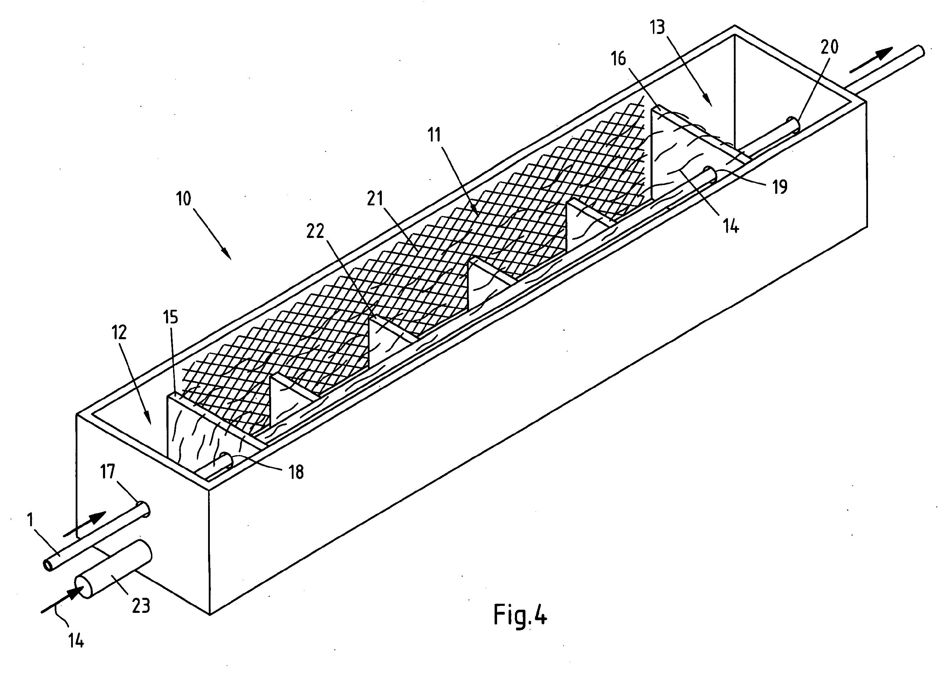

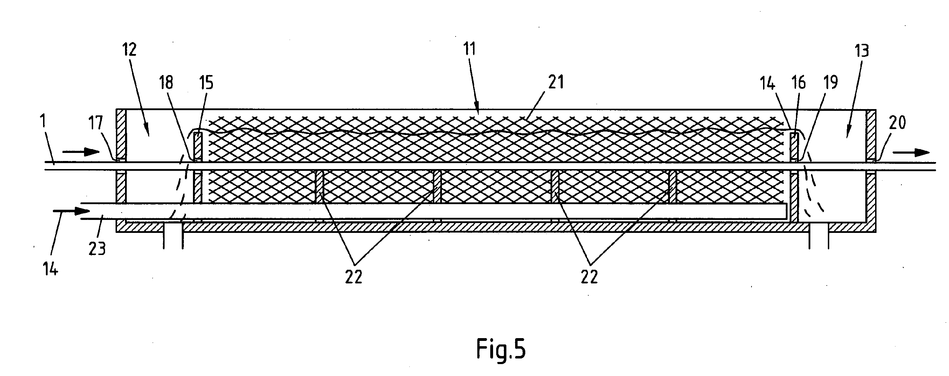

An example for an electrolytic bath that can be used for electrolytically applying the zinc layer and/or the silicate layer in continuous operation is depicted in Figs. 4 and 5 and explained in more detail in the discussion of the specific examples below.

The following Examples are provided to illustrate certain aspects of the invention and it is understood that such an Example does not limit the scope of the invention as defined in the appended claims.

### EXAMPLE 1

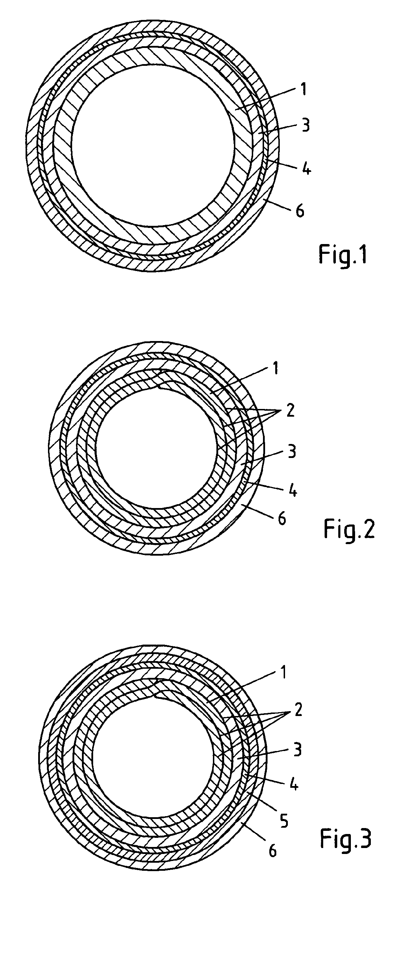

PVF coated single-wound steel tubes of the type as depicted in Fig. 1 were prepared on a continuous process line in accordance with the following procedure:
(1) Metal tube: Single-wound steel tube 1 having 8 mm outer diameter and 0.7 mm wall thickness fabricated from an SPCC steel sheet.
(2) Zinc plating layer: A zinc plating layer 3 of 25 microns thickness was cathodically formed on the outer circumferencial surface of the single-wound steel tube 1 by employing an acidic electrolyte (pH 2.8) containing 790 g/l ZnSO₄, 6 g/l boric acid, 4 g/l ZnCl₂ and 16 ml/l organic additives and applying an electric current at a density of 120 A/dm² at a temperature of 55-60 °C.
   Zinc electroplating was carried out in a continuous plating bath **10** as depicted in Figs. 4 and 5. Referring now to Fig. 4, the plating bath **10** comprises an inner chamber **11** ("electrolyte bath") and two outer chambers **12,13** ("spill chambers"). Electroplating takes place in the inner electrolyte bath **11**. During operation, the outer spill chambers **12,13** take up electrolyte solution **14** spilling from the electrolyte bath **11** over the inner walls **15,16** into the spill chambers **12,13**. The tube **1** enters the electrolyte bath **11** through passages **17,18** and exits the electrolyte bath **11** through passages **19,20** at a constant speed and in a continuous manner. Platinized titanium mesh electrodes **21** are provided along two adjacent inside walls of the electrolyte bath that face one another. Note that in Fig. 4 only one of the two electrodes **21** is shown. During operation, the electrodes **21** serve as anode while the metal tube **1** serves as cathode. While the tube passes the electrolyte bath the tube is held in place by support sockets **22**. When in operation the electrolyte bath is floated with electrolyte solution **14** by supplying electrolyte solution **14** through pipe **23** in a continuous manner. Pipe **23** extends through outer wall **24** and inner wall **15** of the plating bath **10**. As a consequence of the continuous supply of electrolyte solution **14,** in the electrolyte bath **11** the tube **1** is covered at all times with electrolyte solution **14.** Excess electrolyte solution **14** spilling over the inner walls **15,16** or through the inner passages **18,19** enters spill chambers **12,13** from where it is recirculated into the electrolyte chamber **11** (note that recirculation is not shown in Fig. 4). The plating bath **10** as shown in Figs. 4 and **5** allows electroplating the tube **1** in an continuous manner.
   Zinc electroplating was effected by arranging three of the continuous plating bathes **10** as described in Fig. 4 in sequence.
   Prior to zinc electroplating the steel tube **1** was thoroughly cleaned by passing through an alkaline soak bath (100g/1 NaOH + tensides at 60-70 °C) an acidic pickle bath (50 % HCl at 23 °C), and an alkaline electrolyte bath (50 g/l NaOH + 20 g/l sodium gluconate at 60-70 °C).
   After zinc electroplating the coated steel tube **1** was rinsed with water by passing through a rinse bath. After rinsing, the zinc plated steel tube was passed through an activation bath containing a 2 % by weight aqueous solution of HCl. Finally, the zinc plated steel tube was rinsed again with water by passing through a rinse bath.
(3) Silicate film: A silicate film **4** of approximately 200-300 Å thickness was cathodically formed on the zinc plating layer 3 obtained in step (2) by employing an alkaline electrolyte (pH 10.5) containing 10 % by weight sodium silicate (Na₂SiO₃) in water and applying an electric current at a density of 2 A/dm² at a temperature of 75 °C.
   For forming the silicate film **4**, a continuous plating bath **10** as described in Fig. 4 was used. The exposure time of the tube in the electrolyte bath was approximately 60 seconds.
   After passing the silicate electrolyte bath the coated tube was immediately rinsed with water by passing through a rinse bath. After rinsing, the tube was placed in an oven, heated to 125 °C and dried at this temperature for 10-15 minutes.
(4) Resin layer: A resin layer **6** composed of polyvinyl fluoride of 15 µm thickness by flushing the dried coated single-wound steel tube **1** subjected to treatments (2) and (3) above with a dispersion of polyvinyl fluoride (PVF) in propylene carbonate in a ratio of 40:60 by weight. The polyvinyl fluoride used had a grain size < 5 µm.
   Surface smoothing of the PVF coating was effected with the aid of a device **24** containing air nozzles **25** as depicted in Fig. 6. Referring now to Fig. 6, after flushing with the PVF dispersion the coated steel tube 1 was guided through a cylindrical passage **26** having, in equal distance to one another, a plurality of air nozzles **25** arranged around the inner circumference of the conically shaped entry **27** of the passage. The air nozzles **25** are each directed at an angle of approximately 30° towards the outer circumferential surface of the incoming tube **1.** The tube **1** is aligned in the center of the cylindrical passage **26.** When air **29** or any other suitable inert gas is supplied to the nozzles **25** through an air pipe **28,** the PVF dispersion is uniformly distributed on the outer circumferential surface of the tube 1 resulting in a uniform PVF coating.
   Afterwards, the resin coated tube was passed through an temperature gradient oven where it was first heated to approximately 220-225 °C for the propylene carbonate solvent to evaporate, and afterwards to approximately 240-245 °C for the resin to melt. After thermal treatment, the resin coated tube is allowed to cool down to room temperature whereby the resin coating solidifies.
(5) Testing: Five specimens of the coated tubes were subjected to corrosion testing in accordance with ASTM B 117 (salt spray test). The coated tubes were coiled 10-fold around a rod having 2.5 times the diameter of the coated tube. Subsequently, the rod was removed and the coiled tube was placed in the salt spray cabin. At 1000 hours the specimens were removed from the salt spray atmosphere and visually inspected. Specimens were rated 1 = excellent, 2 = good, 3 = satisfactory, 4 = poor, and 5 = very poor. Specimens rated 1 showed no change in optical appearance. Furthermore, after 1000 hours in the salt spray atmosphere, the specimens were physically inspected by placing several cuts into the resin with a sharp knife and evaluating the adhesion strength of the resin coating. Adhesion strength of the resin coating was rated 1 = excellent, 2 = good, 3 = satisfactory, 4 = poor, and 5 = very poor. The test results are summarized in Table 1.

Furthermore, five specimens of the coated tubes were subjected to adhesion testing in accordance with ISO 2409 (cross cut test). Failures were determined at >15% of the cross cut section. The specimens were rated 0 (best) to 5 (worst). Ratings 0-3 were assigned the grade "pass" (<15%). Ratings 4-5 were assigned the grade "fail" (>15%). All samples passed the adhesion test. The test results are summarized in Table 1.

### EXAMPLE 2

PVF coated double-wound steel tubes of the type as depicted in Fig. 2 were prepared on a continuous process line in accordance with the following procedure:
(1) Metal tube: Double-wound steel tube **1** having 4.75 mm outer diameter and 0.7 mm wall thickness was fabricated from an SPCC steel sheet having a copper layer **2** of 5 µm film thickness.
(2) A zinc plating layer **3** of approximately 25 µm thickness was formed in the same manner as in step (2) of Example 1.
(3) A silicate film **4** of approximately 200-300 Å thickness was formed in the same manner as in step (3) of Example 1.
(4) A polyvinyl fluoride layer **6** of approximately 20 µm thickness was formed in the same manner as in step (4) of Example 1.
(5) Testing: Corrosion resistance testing (salt spray test according to ASTM B 117) and adhesion testing (cross cut test according to ISO 2409) were conducted in the same manner as described in Example 1. The test results are summarized in Table 1. All five samples passed the salt spray test at 1000 hours as well as the adhesion test.

### EXAMPLE 3

Example 2 was repeated varying the dwell time in step (3) in the formation of the silicate film **4**. The resulting coated tubes are of the type as depicted in Fig. 2.

Conditions for silicate film formation

| **Example** | **Na**_{**2**}**SiO**_{**3**} **conc** | **pH** | **Current** | **Temp.** | **Time** |
|---|---|---|---|---|---|
| EXAMPLE 3A | 10% | 10.5 | 2 A/dm² | 75 | 20 sec |
| EXAMPLE 3B | 10% | 10.5 | 2A/dm² | 75 | 30 sec |
| EXAMPLE 3C | 10% | 10.5 | 2 A/dm² | 75 | 50 sec |
| EXAMPLE 3D | 10% | 10.5 | 2 A/dm² | 75 | 90 sec |
| EXAMPLE 3E | 10% | 10.5 | 2 A/dm² | 75 | 120 sec |
| EXAMPLE 3F | 10% | 10.5 | 2 A/dm² | 23 | 30 sec |
| EXAMPLE 3G | 10% | 10.5 | 2 A/dm² | 23 | 120 sec |
| EXAMPLE 3H | 5% | 10.5 | 3 A/dm² | 75 | 30 sec |
| EXAMPLE 31 | 5% | 10.5 | 3 A/dm² | 75 | 120 sec |
| EXAMPLE 3J | 15% | 10.5 | 1.5 A/dm² | 75 | 30 sec |
| EXAMPLE 3K | 15% | 10.5 | 1.5 A/dm² | 75 | 120 sec |

Testing: Corrosion resistance testing (salt spray test according to ASTM B 117) and adhesion testing (cross cut test according to ISO 2409) were conducted in the same manner as described in Example 1. The test results are summarized in Table 1.

The results show that the dwell time in the electrolyte bath during silicate film formation and, hence, the thickness of the silicate film, has no significant influence on the corrosion and adhesion properties of the coated tubes. The results further show that varying the temperature and concentration of the electrolyte bath during silicate film formation has no significant influence on the corrosion and adhesion properties of the coated tubes.

### EXAMPLE 4

Corrosion resistant resin coated tubes were manufactured in the same manner as in Example 2 with the exception that, in the process of forming the silicate film in step (3), the tube was immediately dried after passing the silicate electrolyte bath without prior rinsing.

Corrosion resistance testing (salt spray test according to ASTM B 117) and adhesion testing (cross cut test according to ISO 2409) were conducted in the same manner as described in Example 1. The test results are summarized in Table 1.

The results show that rinsing the tube after electrolytic formation of the silicate film 4 results in improved corrosion and adhesion properties.

### EXAMPLE 5

In this example, the use of an additional primer layer 5 between the silicate film 4 and the resin layer 6 was tested.

PVF coated double-wound steel tubes of the type as depicted in Fig. 3 were prepared on a continuous process line in accordance with the following procedure:
(1) Metal tube: A double-wound steel tube as in Example 2 (1) was used.
(2) A zinc plating layer **3** of approximately 15 µm thickness was formed in the same manner as in step (2) of Example 1.
(3) A silicate film 4 of approximately 200-300 Å thickness was formed in the same manner as in step (3) of Example 1.
(4) A primer **5** of 5 µm thickness composed of epoxy resin (epoxy polyester) as an intermediate layer was applied onto the tube as manufactured in step (3) by dipping, coating and heat treating at 250 °C for 90 sec.
(4) A polyvinyl fluoride layer **6** of approximately 20 µm thickness was formed on the tube in the same manner as in step (4) of Example 1.
(5) Testing: Corrosion resistance testing (salt spray test according to ASTM B 117) and adhesion testing (cross cut test according to ISO 2409) were conducted in the same manner as described in Example 1. The test results are summarized in Table 1.

The results show that an additional primer layer 5 between the silicate film **4** and the resin layer **6** has a positive effect on the corrosion and adhesion properties of the coated tube.

### COMPARISON EXAMPLE

Corrosion resistant resin coated tubes were manufactured in the same manner as in Example 5 with the exception that the silicate film according to step (3) was not applied. The corrosion resistant resin coated tube thus prepared did not contain a silicate film.

Corrosion resistance testing (salt spray test according to ASTM B 117) and adhesion testing (cross cut test according to ISO 2409) were conducted in the same manner as described in Example 1. The test results are summarized in Table 1.

The specimens thus prepared showed poor performance in both the corrosion testing and the adhesion testing. The results show that the silicate film 4 contributes significantly to the corrosion and adhesion properties of the corrosion resistant resin coated tubes in accordance with the instant invention.

**TABLE 1**

| **Example** | **Salt Spray Test after 1000h (ASTM B 117)** | | **Cross-Cut-Test (ISO 2409)** |
|---|---|---|---|
| | **Corrosion** | **Adhesion** | |
| 1 | 1 | 2 | 2 |
| 2 | 1 | 2 | 2 |
| 3A | 1 | 2 | 2 |
| 3B | 1 | 2 | 2 |
| 3C | 1 | 2 | 2 |
| 3D | 1 | 2 | 2 |
| 3E | 1 | 2 | 2 |
| 3F | 1 | 2 | 2 |
| 3G | 1 | 2 | 2 |
| 3H | 1 | 2 | 2 |
| 3I | 1 | 2 | 2 |
| 3J | 1 | 2 | 2 |
| 3K | 1 | 2 | 2 |
| 4 | 2^{a} | 3^{b} | 3 |
| 5 | 1 | 1 | 1 |
| Comparison | 5^{c} | 5^{d} | 4 |

| | | | |
|---|---|---|---|
| ^{a} slight bubble formation in resin layer | | | |
| ^{b} partial peel off of resin layer | | | |
| ^{c} strong bubble formation in resin layer | | | |
| ^{d} complete peel off of resin layer | | | |

The principle of the invention and the best mode contemplated for applying that principle have been described. It is to be understood that the foregoing is illustrative only and that other means and techniques can be employed without departing from the true scope of the invention defined in the following claims.

## Claims

1. A corrosion resistant article comprising a metal body (1) and a protective coating applied on at least one surface of said metal body (1), said protective coating comprising:
a zinc layer (3) comprisingzinc;
a silicate layer (4) comprising at least one silicate; and
a synthetic resin layer (6) comprising at least one fluoroplastic material.

2. The article of claim 1, wherein said protective coating is substantially chromate free.

3. The article of claim 1 or 2, wherein said metal body (1) is made from a metal selected from the group consisting of steel, stainless steel, aluminum, iron, nickel, copper, zinc, magnesium, and alloys thereof.

4. The article of any one of claims 1 to 3, wherein said metal body (1) is a metal tube (1).

5. The article of claim 4, wherein said metal tube (1) is selected from the group consisting of single-wound metal tubes, double-wound metal tubes, electro-resistance-welded metal tubes and solid-drawn metal tubes.

6. The article of claim 4 or 5, wherein said metal tube (1) further comprises a copper layer (2) provided on at least one of its surfaces.

7. The article of claim 6, wherein said copper layer (2) has a thickness of about 0.5 to about 10 microns.

8. The article of any one of claims 1 to 7, wherein said zinc layer (3) comprises electrolytically applied zinc.

9. The article of any one of claims 1 to 8, wherein said zinc layer (3) has a thickness of about 1 to about 75 microns.

10. The article of any one of claims 1 to 9, wherein said silicate layer (4) contains an alkali silicate.

11. The article of any one of claims 1 to 10, wherein said silicate layer (4) comprises a disilicate mineral structure.

12. The article of any one of claims 1 to 11, wherein said silicate layer (4) has a thickness of 50 to 800 Å.

13. The article of any one of claims 1 to 12, wherein said silicate layer (4) comprises electrolytically applied silicate.

14. The article of any one of claims 1 to 13, wherein said fluoroplastic material comprises a thermoplastic resin.

15. The article of any one of claims 1 to 14, wherein said fluoroplastic material is selected from the group consisting of polyvinyl fluoride (PVF), polyvinylidene fluoride (PVDF), polytrifluorostyrene, polytetrafluoroethylene (PTFE), fluorinated ehtylene propylene (FEP), polyhexafluoropropylene, and polychlorotrifluoroethylene (PCTFE).

16. The article of any one of claims 1 to 15 wherein the synthetic resin layer (6) has a thickness of about 1 to about 50 microns.

17. The article of any one of claims 1 to 16, wherein said protective coating further comprises a primer (5) interposed between the silicate layer (4) and the synthetic resin layer (6).

18. The article of claim 17, wherein said primer (5) contains a material selected from the group consisting of epoxy resin, polyamide resin, silane coupling agents and titanium coupling agents.

19. The article of claim 18, wherein said epoxy resin is a material selected from the group consisting of bisphenol-A type, bisphenol-F type, bisphenol-AD type, phenol novolac based, cresol novolac based, brominated bisphenol-A type and polyglycol epoxy resins.

20. The article of any one of claims 17 to 19, wherein the primer (5) has a thickness of about 1 to about 20 microns.

21. A method of manufacturing a corrosion resistant article comprising a metal body (1) and a protective coating applied on at least one surface of said metal body (1), said method comprising:
electrolytically coating said metal body (1) with zinc to form a zinc layer (3);
contacting at least a portion of the coated metal body into a medium comprising at least one silicate and having a basic pH and wherein said medium is substantially free of chromates to form a silicate layer (4); and
contacting the coated metal body with a synthetic resin medium containing a fluoroplastic material to form a synthetic resin layer (6).

22. The method of claim 21, wherein the zinc layer (3) is applied at a thickness of about 1 to about 75 microns.

23. The method of claim 21 or 22, wherein, after formation of the zinc layer (3), the metal body is rinsed.

24. The method of any one of claims 21 to 23, wherein the application of said silicate layer (4) further comprises introducing an electric current to said medium wherein said metal body is employed as a cathode.

25. The method of any one of claims 21 to 24, wherein in the application of said silicate layer (4) an aqueous medium is used.

26. The method of any one of claims 21 to 25, wherein in the application of the silicate layer (4) the pH of said medium is adjusted to a value of about 10 to about 11.5.

27. The method of any one of claims 21 to 26, wherein in the application of the silicate layer (4) said medium contains sodium silicate.

28. The method of any one of claims 21 to 27, wherein in the application of the silicate layer (4) said medium contains silicate in a concentration of about 1 to about 25 wt.%.

29. The method of any one of claims 21 to 28, wherein the silicate layer (4) is applied at a thickness of about 50 to about 800 Angstroms.

30. The method of any one of claims 21 to 29, wherein the application of said silicate layer (4) further comprises:
rinsing the body,
drying the body.

31. The method of claim 30, wherein said drying is conducted at a temperature of at least about 120 °C.

32. The method of any one of claims 21 to 31, wherein said synthetic resin medium comprises a dispersion of a synthetic resin in an organic solvent.

33. The method of claim 32, wherein said synthetic resin contains a fluoroplastic material selected from the group consisting of polyvinyl fluoride (PVF), polyvinylidene fluoride (PVDF), polytrifluorostyrene, polytetrafluoroethylene (PTFE), fluorinated ehtylene propylene (FEP), polyhexafluoropropylene, and polychlorotrifluoroethylene (PCTFE).

34. The method of any one of claims 21 to 33, wherein the method further comprises a thermal treatment of said metal body to dry the synthetic resin layer (6) and to interlock with and adhere to the previous layers.

35. The method of any one of claims 21 to 34, wherein the synthetic resin layer (6) is applied at a thickness of about 1 to about 50 microns.

36. The method of any one of claims 21 to 35, further comprising:
applying to said body a primer material that is suitable to improve the adhesion to the synthetic resin layer (6) to form a primer (5), said primer (5) being applied prior to applying the synthetic resin layer (6).

37. The method of claim 35, wherein said primer material is selected from the group consisting of epoxy resin, polyamide resin, silane coupling agents and titanium coupling agents.

38. The method of claim 35 or 36, wherein the primer (5) is applied at a thickness of 1 to 20 microns.

39. The method of any one of claims 21 to 38, wherein a steel tube or a aluminum tube is used.

40. The method of any one of claims 18 to 33, wherein a metal body (1) made from a metal selected from the group consisting of steel, stainless steel, aluminum, iron, nickel, copper, zinc, magnesium, and alloys thereof, is used.

41. A fluid carrying system for use in motor vehicles comprising a metal tube (1) and a protective coating applied on at least one surface of said metal tube (1), said protective coating comprising:
a zinc layer (3) comprisingzinc;
a silicate layer (4) comprising at least one silicate;
a synthetic resin layer (6) comprising at least one a fluoroplastic material.

42. The system of claim 42, wherein said protective coating further comprises a primer (5) interposed between the silicate layer (4) and the synthetic resin layer (6).

43. The system of claim 41 or 42, wherein said primer (5) contains a material selected from the group consisting of epoxy resin, polyamide resin, silane coupling agents and titanium coupling agents.

44. The system of claim 41, 42 or 43 wherein the system comprises a brake pipe, fuel line or HVAC component.

45. Use of an article according to any one of claims 1 to 20 or manufactured according to a method according to any one of claims 21 to 40, as a corrosion resistant brake pipe in motor vehicles.
